# EUROPEAN PATENT APPLICATION

(11) **EP 4 694 548 A1**
(43) Date of publication of application: **11.02.2026**
(21) Application number: 24814165.7
(22) Date of filing: 14.05.2024
(51) Int. Cl.: H04W 76/14

(54) **DEVICE CONNECTION METHOD AND RELATED APPARATUS**

(30) Priority: 30.05.2023 CN 202310627480
(71) Applicant: Huawei Technologies Co., Ltd., Shenzhen, Guangdong 518129 (CN)
(72) Inventor: JIANG, Shunji, Shenzhen, Guangdong 518129 (CN); WANG, Zongbo, Shenzhen, Guangdong 518129 (CN); ZHENG, Jiangzhen, Shenzhen, Guangdong 518129 (CN)
(74) Representative: Maiwald GmbH
(86) International application number: PCT/CN2024/093016
(87) International publication number: WO 2024/244964

(57) **Abstract**

A device connection method is provided, and relates to the field of terminal software. The method includes: obtaining a location relationship between a first device and each of a plurality of devices in a scenario in which the first device is located (501); when a location relationship with a second device in the plurality of devices meets a preset condition, establishing a connection relationship with the second device, where the connection relationship is used for file transfer or used to transfer, to a connected device, media content presented by the first device for presentation (502); and after the connection relationship is established, displaying a first identifier of the first device, a second identifier of the second device, and association information between the first identifier and the second identifier (503). In this application, a terminal may determine, based on a location relationship between the terminal and another device in a scenario in which the terminal is located, a terminal that meets a preset condition, and automatically establish a connection relationship with the terminal that meets the preset condition, so that a user does not need to manually select a terminal each time a scenario changes. This improves user experience.

## Description

This application claims priority to Chinese Patent Application No. 202310627480.3, filed with the China National Intellectual Property Administration on May 30, 2023 and entitled "DEVICE CONNECTION METHOD AND RELATED DEVICE", which is incorporated herein by reference in its entirety.

### TECHNICAL FIELD

This application relates to the terminal field, and in particular, to a device connection method and a related device.

### BACKGROUND

A user has an increasing quantity of intelligent devices, and the user often uses a plurality of intelligent devices in one scenario. Scenarios may be usually divided on a per-area basis. For example, being in a living room and being in a bedroom represent two different scenarios, and a user often carries an intelligent device when switching between scenarios. When the user switches between scenarios, the carried intelligent device (such as a mobile phone) may need to be connected to different scenarios, to facilitate the user to execute tasks such as file transfer and collaborative office. During scenario switching, how to implement fast switching of a carried device between different multi-device scenarios is a technical problem that needs to be urgently resolved.

### SUMMARY

This application provides a device connection method, so that user experience can be improved.

According to a first aspect, this application provides a device connection method, applied to a first device. The method includes: obtaining a location relationship between the first device and each of a plurality of devices in a scenario in which the first device is located; when a location relationship with a second device in the plurality of devices meets a preset condition, establishing a connection relationship with the second device, where the connection relationship is used for file transfer or used to transfer, to a connected device, media content presented by the first device for presentation; and after the connection relationship is established, displaying a first identifier of the first device, a second identifier of the second device, and association information between the first identifier and the second identifier.

In the foregoing manner, a terminal may determine, based on a location relationship between the terminal and another device in a scenario in which the terminal is located, a terminal that meets a preset condition, and automatically establish a connection relationship with the terminal that meets the preset condition, so that a user does not need to manually select a terminal each time a scenario changes, and the user does not need to determine a specific device that needs to be connected; and provided that the user approaches a device that needs to be connected in a physical world, a connection to the device can be automatically established. This improves user experience.

In a possible implementation, the first identifier, the second identifier, and the associated information are displayed through one of a status bar, a home screen wallpaper, and a floating window.

In a possible implementation, the association information includes a change process of changing the first identifier and the second identifier from an unassociated state to an associated state.

In a possible implementation, the change process is displayed by using a special effect of adsorption.

In a possible implementation, a display style of the first identifier is related to a device type of the first device; or a display style of the second identifier is related to a device type of the second device; or the location relationship includes a distance, and a display style of the first identifier is related to the distance; or a display style of the second identifier is related to a distance, where the display style includes at least one of a display size, a display shape, and a display color.

In a possible implementation, the location relationship includes at least one of a distance, a change of a distance, a relative direction, and a change of a relative direction.

In a possible implementation, the location relationship includes a distance, the preset condition includes that the distance is less than a distance threshold, and at least two different types of devices correspond to different distance thresholds.

In a possible implementation, the location relationship is a location relationship in a three-dimensional space. The method further includes: displaying a first device distribution map based on the location relationship, where the first device distribution map includes identifiers corresponding to the devices, and display locations, in the first device distribution map, of the identifiers in the first device distribution map match the location relationship at a first angle of view; and receiving an angle-of-view switching instruction, and displaying a second device distribution map, where the second device distribution map includes the identifiers corresponding to the devices, and display locations, in the second device distribution map, of the identifiers in the second device distribution map match the location relationship at a second angle of view.

In a possible implementation, the method further includes: when the location relationship with the second device in the at least one device meets the preset condition, triggering establishment of a connection relationship between a device, other than the second device, in the plurality of devices and the second device.

In a possible implementation, displaying the first identifier of the first device, the second identifier of the second device, and the association information between the first identifier and the second identifier includes: receiving a first operation, switching a currently displayed application interface to a connection interface, and displaying, on the connection interface, the first identifier of the first device, the second identifier of the second device, and the association information between the first identifier and the second identifier. The method further includes: displaying, on the connection interface in a floating manner, a card corresponding to the application interface; receiving a second operation, where the second operation indicates to move the card to the second identifier; and transferring, to the second device for presentation, media content presented on the application interface.

According to a second aspect, this application provides a device connection apparatus, used in a first device. The apparatus includes:
an obtaining module, configured to obtain a location relationship between the first device and each of a plurality of devices in a scenario in which the first device is located; and
a processing module, configured to: when a location relationship with a second device in the plurality of devices meets a preset condition, establish a connection relationship with the second device, where the connection relationship is used for file transfer or used to transfer, to a connected device, media content presented by the first device for presentation; and
after the connection relationship is established, display a first identifier of the first device, a second identifier of the second device, and association information between the first identifier and the second identifier.

In a possible implementation, the first identifier, the second identifier, and the associated information are displayed through one of a status bar, a home screen wallpaper, and a floating window.

In a possible implementation, the association information includes a change process of changing the first identifier and the second identifier from an unassociated state to an associated state.

In a possible implementation, the change process is displayed by using a special effect of adsorption.

In a possible implementation,
a display style of the first identifier is related to a device type of the first device; or
a display style of the second identifier is related to a device type of the second device; or
the location relationship includes a distance, and a display style of the first identifier is related to the distance; or
a display style of the second identifier is related to the distance, where
the display style includes at least one of a display size, a display shape, and a display color.

In a possible implementation, the location relationship includes at least one of a distance, a change of a distance, a relative direction, and a change of a relative direction.

In a possible implementation, the location relationship includes a distance, the preset condition includes that the distance is less than a distance threshold, and at least two different types of devices correspond to different distance thresholds.

In a possible implementation, the location relationship is a location relationship in a three-dimensional space, and the processing module is further configured to:
display a first device distribution map based on the location relationship, where the first device distribution map includes identifiers corresponding to the devices, and display locations, in the first device distribution map, of the identifiers in the first device distribution map match the location relationship at a first angle of view; and
receive an angle-of-view switching instruction, and display a second device distribution map, where the second device distribution map includes the identifiers corresponding to the devices, and display locations, in the second device distribution map, of the identifiers in the second device distribution map match the location relationship at a second angle of view.

In a possible implementation, the processing module is further configured to:
when the location relationship with the second device in at least one device meets the preset condition, trigger establishment of a connection relationship between a device, other than the second device, in the plurality of devices and the second device.

In a possible implementation, the processing module is specifically configured to:
receive a first operation, switch a currently displayed application interface to a connection interface, and display, on the connection interface, a first identifier of the first device, a second identifier of the second device, and association information between the first identifier and the second identifier.

The processing module is further configured to: display, on the connection interface in a floating manner, a card corresponding to the application interface;
receive a second operation, where the second operation indicates to move the card to the second identifier; and
transfer, to the second device for presentation, media content presented on the application interface.

According to a third aspect, an embodiment of this application provides a device connection apparatus. The device connection apparatus may include a memory, a processor, and a bus system. The memory is configured to store a program. The processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to a fifth aspect, an embodiment of this application provides a computer program product including instructions. When the computer program product is run on a computer, the computer is enabled to perform the method according to any one of the first aspect and the optional implementations of the first aspect.

According to a sixth aspect, this application provides a chip system. The chip system includes a processor, configured to support a device connection apparatus in implementing some or all of functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1 is a diagram of an application architecture;
FIG. 2 is a diagram of an application architecture;
FIG. 3 is a diagram of an application architecture;
FIG. 4 is a diagram of an application scenario;
FIG. 5 is a diagram of an embodiment of a device connection method according to an embodiment of this application;
FIG. 6 is a diagram of an interface according to an embodiment of this application;
FIG. 7 is a diagram of an interface according to an embodiment of this application;
FIG. 8 is a diagram of an interface according to an embodiment of this application;
FIG. 9 is a diagram of an interface according to an embodiment of this application;
FIG. 10 is a diagram of an interface according to an embodiment of this application;
FIG. 11 is a diagram of an interface according to an embodiment of this application;
FIG. 12(a) to FIG. 12(e) are a diagram of an interface according to an embodiment of this application;
FIG. 13 is a diagram of an embodiment of a device connection apparatus according to an embodiment of this application; and
FIG. 14 is a diagram of a structure of an execution device according to an embodiment of this application.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

It should be understood that when an element or layer is located "on (on)" another element or layer, or "connected to (connected to)" or "coupled to (coupled to)" another element or layer, the element or layer may be directly located on the another element or layer, or directly connected to or directly coupled to the another element or layer, or one or more intermediate elements or layers may exist. It should also be understood that when one element or layer is located "between (between)" two elements or layers, the element or layer may be a unique element or layer between the two elements or layers, or one or more intermediate elements or layers may exist.

The terms "substantially (substantially)", "about (about)", and the like are used herein as approximation terms rather than as degree terms, and are intended to take into account inherent deviations of measured values or calculated values that are known to a person of ordinary skill in the art. In addition, when embodiments of the present invention are described, "may (may)" is used to indicate "one or more possible embodiments". The terms "use (use)", "using (using)", and "used (used)" used in this specification may be considered to be synonymous with the terms "utilize (utilize)", "utilizing (utilizing)", and "utilized (utilized)", respectively. In addition, the term "exemplary (exemplary)" is intended to represent an instance or an example.

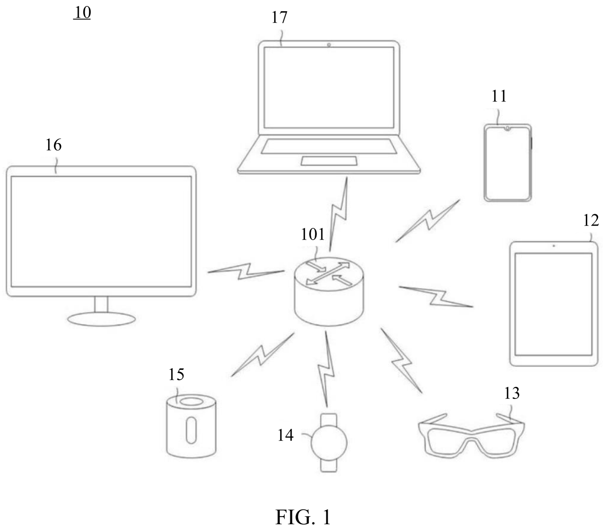

FIG. 1 is a diagram of a system 10 according to some example embodiments. The system 10 may include a plurality of devices, and the devices in FIG. 1 may communicate with each other. In a non-limiting embodiment, as shown in FIG. 1, the system 10 may include a plurality of intelligent devices such as a mobile phone 11, a tablet 12, smart glasses 13, a watch 14, a sound box 15, a smart screen 16, and a notebook computer 17. In addition, the devices in the system 10 may further include devices such as a media player (such as MP3 and MP4), an ultra-mobile personal computer (ultra-mobile personal computer, UMPC), a personal digital assistant (personal digital assistant, PDA), a wireless headset, a smart band, a wireless vehicle-mounted device, an augmented reality (augmented reality, AR)/(virtual reality, VR) device, a television.

In a non-limiting embodiment, when an environment in which the system 10 is located is an environment such as a home, a plurality of devices may be located in a same local area network. As shown in FIG. 1, the system 10 may further include a router 101. The router 101 in the system 10 may be configured as an access point (access point, AP) to provide a signal source of a network. Further, each device in the system 10 may be used as a station (station, STA) to access the router 101. The router 101 may separately communicate with each device in a wired network manner or a wireless network manner. For example, a Wi-Fi link is established between devices by using a wireless fidelity (wireless fidelity, Wi-Fi) protocol to implement communication between the devices. A specific implementation may be that a peer-to-peer (peer-to-peer, P2P) connection (or referred to as Wi-Fi Direct (Wi-Fi direct)) is established between the devices, or the devices access a same router 101, to implement communication between the devices. In some other embodiments, a Bluetooth link may be further established between devices by using a Bluetooth protocol, and communication between the devices is implemented based on the Bluetooth link; or the devices may communicate with each other by using a mobile network or the Internet.

Devices such as a first device and a second device in embodiments of this application may be any device in the foregoing system.

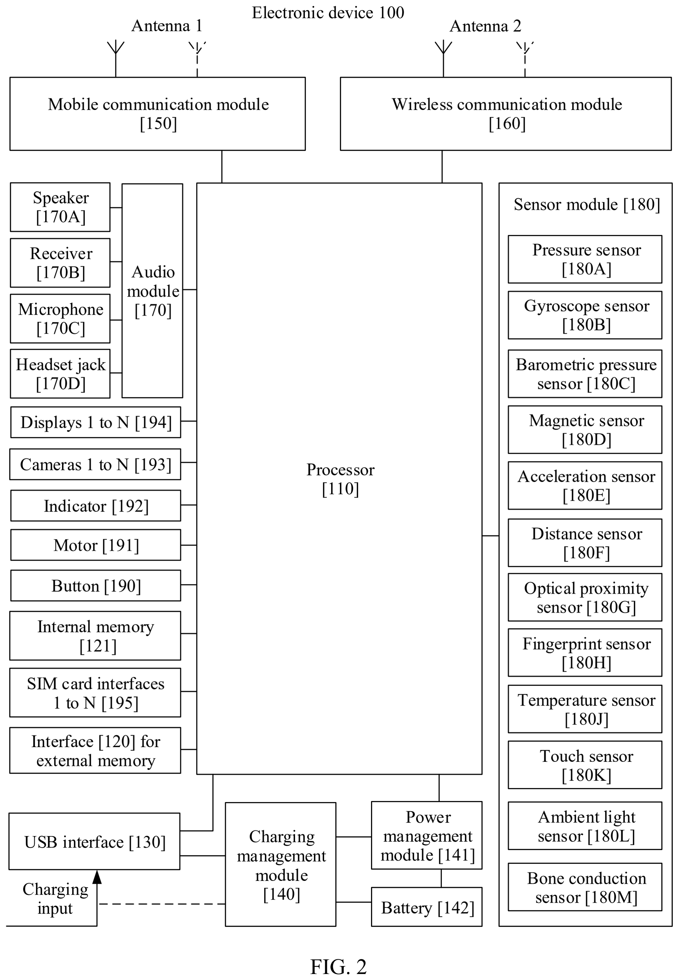

FIG. 2 is a diagram of a structure of an electronic device 100 according to an embodiment of this application. Structures of the foregoing devices (including a first device and a second device) may be shown in FIG. 2.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 120 to the wireless communication module 160. For example, the processor 120 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 120 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be alternatively configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a solution, applied to the electronic device 100, to wireless communication including a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 of the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite systems, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more types of video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various functional applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate a software structure of the electronic device 100.

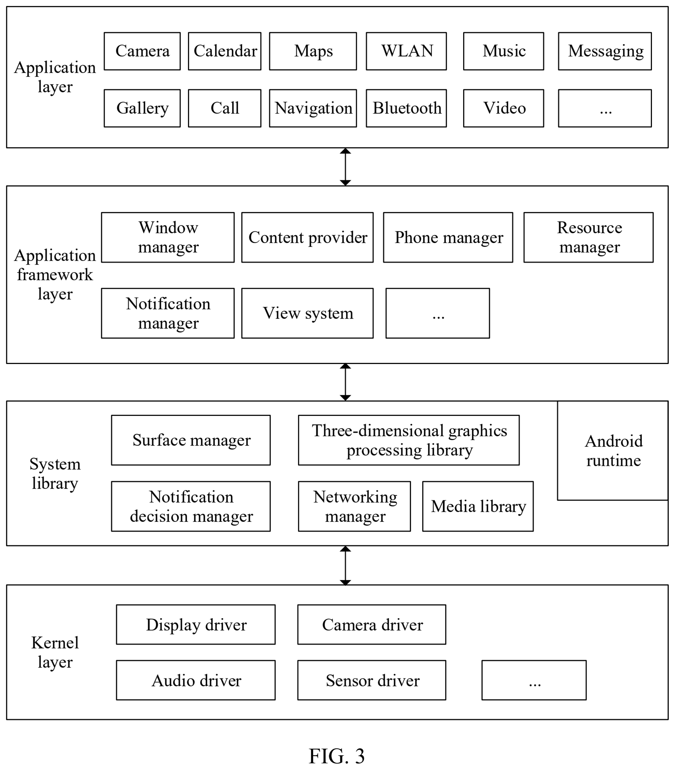

FIG. 3 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and make the data accessible to an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The displayed notification message may automatically disappear after a short stay without requiring a user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, a prompt tone is made, the electronic device vibrates, or an indicator light blinks.

The Android runtime includes a kernel library and a virtual machine. The Android runtime is responsible for scheduling and management of the Android system.

The kernel library includes two parts: a function that needs to be invoked by the Java language and a kernel library of Android.

The application layer and the application framework layer are run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), and a three-dimensional graphics processing library (for example, OpenGL ES).

The surface manager is configured to manage a display subsystem and provide fusion of 2D and 3D layers for a plurality of applications.

The media library supports playing and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The kernel layer is a layer between hardware and software. The kernel layer includes at least a display driver, a camera driver, an audio driver, and a sensor driver.

In a non-limiting embodiment, as shown in FIG. 3, the system library may further include a networking manager, configured to discover a device in the system 10, where the discovered device may be selected as a prompt device and/or a connection device. In some embodiments, when devices in the system 10 are connected to a same AP to constitute a local area network, the devices in the system 10 are peripheral devices of each other, or all the devices in the system 10 are devices near a user. A networking manager of a device in the system 10 may discover all other online devices connected to the same AP, and all the online devices (including the device and another device in the system 10) connected to the same AP complete networking. In some embodiments, a networking manager of a device in the system 10 finds that an account with which one or some of other online devices in a local area network of a same AP are logged in is an account of the device, or an account with which one or some of other online devices in the local area network of the same AP are logged in is an associated account of the account with which the device is logged in. In this case, other devices that are logged in with the account or the associated account are devices trusted by the device, or all devices that are logged in with the account or the associated account are trusted devices of each other. The devices that are logged in with the account or the associated account and that are connected to the same AP complete networking, to ensure notification security and privacy. In some embodiments, when the devices in the system 10 communicate with each other through a mobile network or the Internet, the networking manager may find, via the mobile network or the Internet, that accounts with which some devices in the system 10 are logged in are a same account or an associated account. In addition, when the devices are located near the user, the devices complete networking, to ensure notification security and privacy. The associated account may be an account authorized by the same account. Specifically, a distance between devices and a distance between a user and each device may be determined by using Bluetooth RSSI (Received Signal Strength Indication, received signal strength) ranging or satellite positioning. The networking manager may discover a device near the user in the system 10, and can improve an interaction capability and a collaboration capability between devices, to avoid the user from manually searching for and selecting the device in the system 10, reduce a user operation, and improve efficiency.

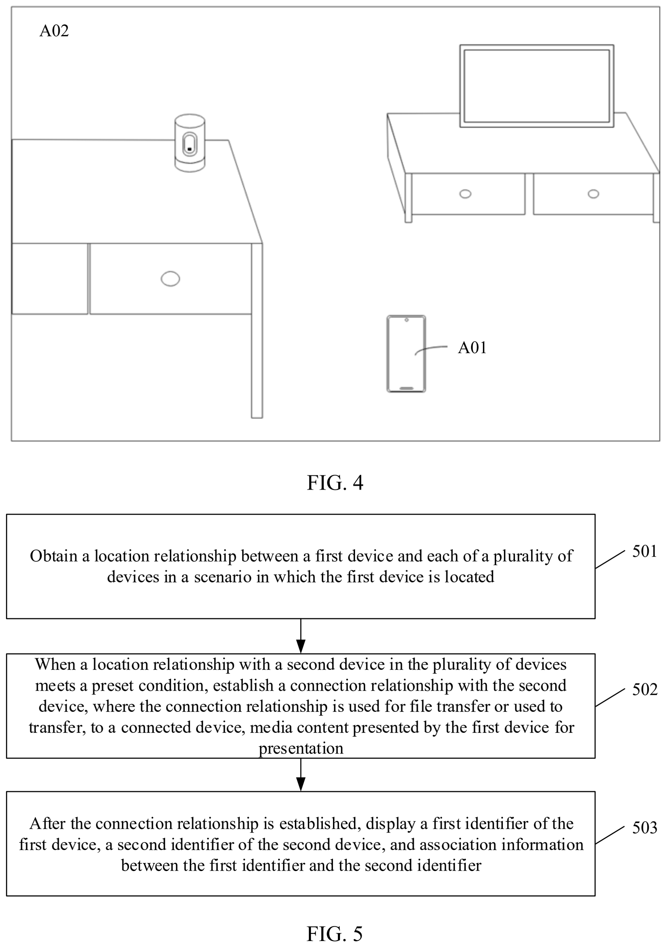

FIG. 4 is a diagram of an application scenario according to this application. The application scenario includes the following.

A local device A01 is usually a handheld mobile device of a user, and the user holds the local device and switches between different scenarios. The device is equipped with an operating system. The operating system has a system-level account. A user uses the account to log in to the operating system.

A scenario A02 is a small area in a physical world, for example, a living room or a bedroom at home. A plurality of intelligent devices are configured in the scenario. The intelligent devices are equipped with an operating system, and the operating system has a system-level account. In the scenario, at least one intelligent device is logged in with an account that is the same as a system-level account of a mobile phone.

A user has an increasing quantity of intelligent devices, and the user often uses a plurality of intelligent devices in one scenario. Scenarios may be usually divided on a per-area basis. For example, being in a living room and being in a bedroom represent two different scenarios, and the user often carries an intelligent device when switching between scenarios. When the user switches between scenarios, the carried intelligent device (such as a mobile phone) may need to be connected to different scenarios, to facilitate the user to execute tasks such as file transfer and collaborative office. During scenario switching, how to implement fast switching of a carried device between different multi-device scenarios is a technical problem that needs to be urgently resolved.

To resolve the foregoing problem, FIG. 5 is a schematic flowchart of a device connection method according to an embodiment of this application. As shown in FIG. 5, the device connection method provided in this embodiment of this application includes the following steps.

501: Obtain a location relationship between a first device and each of a plurality of devices in a scenario in which the first device is located.

This embodiment of this application may be applied to the first device.

In a possible implementation, the first device may be located indoors, the scenario in which the first device is located may be a scenario in a physical space or a use scenario, and the physical scenario may be a same room of the first device or a room close to the first device. The use scenario may be a scenario related to a function used by a user when the user uses the first device. For example, when the user uses the first device for office, the scenario in which the first device is located may be a working scenario, and a device in the scenario in which the first device is located may be another device in a same office.

For example, each scenario may correspond to one three-dimensional space. For example, a living room and a study each correspond to one three-dimensional space. Alternatively, a plurality of scenarios may correspond to one three-dimensional space. For example, a plurality of scenarios at home share one three-dimensional space. Usually, based on a distance relationship between locations, a plurality of short-distance scenarios may share one three-dimensional space, and a carried device may perform scenario switching without three-dimensional space switching. Independent three-dimensional spaces may be used between scenarios that are far away from each other. For example, a home and a company are two independent three-dimensional spaces.

Construction of a three-dimensional space: Each terminal may determine information such as a relative location relationship between devices and device types through real-time communication, and then construct a three-dimensional space in real time based on the determined information such as the relative location relationship and the device types. Alternatively, the three-dimensional space may be constructed by a fixed device in a scenario in advance. For example, when a mobile device joins, the fixed device constructs a three-dimensional space model, and then transmits the three-dimensional space model to the mobile terminal. Then, the mobile terminal adjusts the three-dimensional space model in real time based on the model and the newly added device. Optionally, the fixed device is an intelligent device with a fixed location, for example, a television or a lamp.

In a possible implementation, the first device may obtain the location relationship with each of the plurality of devices in the scenario in which the first device is located. For example, the first device may obtain, through calculation, the location relationship with each of the plurality of devices in the scenario in which the first device is located, or the first device may receive the location relationship, sent by another device (for example, a central control device or another terminal device in a system), with each of the plurality of devices in the scenario in which the first device is located, or the first device may calculate a location relationship with a part of the plurality of devices in the scenario in which the first device is located, and receive a location relationship, sent by another device (for example, a central control device or another terminal device in a system), with the other part of the plurality of devices in the scenario in which the device is located.

In a possible implementation, the location relationship may be at least one of a relative distance, a change of a relative distance, a relative direction, and a change of a relative direction.

The following describes how to determine a location relationship between the first device and another device. In an implementation, the location relationship between the first device and the another device may be determined by using the conventional technology such as ultra-wideband (ultra-wideband, UWB), ultrasound, laser, or vision. For example, the relative distance and the relative direction may be established by using a bidirectional connection between the first device and the another device (the first device and the device are required to have hardware that can transmit/receive a wireless positioning signal), and a distance and an angle between the handheld first device and the another device are determined through calculation. In an implementation, triangulation may be performed between the plurality of devices (a handheld device has hardware that can transmit/receive a wireless positioning signal, and there are three or more pieces of fixed hardware that can transmit/receive a wireless positioning signal in a space, where the hardware may exist independently or depends on another device, in the space, on which the hardware has been installed), and absolute positioning of each device may be determined by using a time difference based on a time difference of arrival (TODA). When there is enough hardware that can transmit/receive a wireless positioning signal, a six-degree-of-freedom (6DoF) posture of a device may be determined, and devices may share respective postures, so that a posture of the first device and a posture of the another device may be obtained.

In a possible implementation, when the user uses the first device, there is a requirement for establishing a connection relationship between the first device and another device in a scenario. After the connection relationship is established, file transfer or data transfer may be performed between the devices (the data transfer may be understood as: transferring, to a connected device, media content presented by a device for presentation. For example, a video or music that is being played may be transferred to another device for continuous playing).

Optionally, to enable the user to conveniently know another specific device with which a connection relationship may be established in a scenario in which the device being used (namely, the first device) is located and a specific location of the another specific device, an interface may be displayed on the first device, and the interface may present another device in the scenario in which the first device is located and a location relationship between the another device and the first device.

Optionally, to enable the user to accurately know a location of another device, the location relationship presented on the interface may be a location relationship between the devices in a three-dimensional space (a three-dimensional location relationship can more accurately represent locations of devices in some scenarios (compared with a two-dimensional location relationship). For example, if horizontal locations of two devices are close to each other, it is difficult for the user to distinguish between the devices based on two-dimensional spatial locations).

Optionally, a location relationship in the three-dimensional space may be represented by using a distance and a direction between two devices, or may be represented by three-dimensional coordinates of the two devices.

In a possible implementation, the first device may display a first device distribution map based on the location relationship, where the first device distribution map includes identifiers corresponding to the devices, and display locations, in the first device distribution map, of the identifiers in the first device distribution map match the location relationship. The user may know, based on the first device distribution map presented by the first device, a location of another device in the three-dimensional space.

In a possible implementation, the first device distribution map may include identifiers of the first device and the another device. Because a location of the first device is a current location of the user, the user may know the location of the another device in the three-dimensional space by using a location relationship between the identifier of the another device and the identifier of the first device.

Optionally, the identifier may be a geometric figure, a skeuomorphic figure, or any other figure having a referential meaning. For example, a mobile phone icon (skeuomorphic figure) may be placed in a sphere (geometric figure) as an identifier of a mobile phone device.

Optionally, a size of the identifier may indicate a distance relationship between the another device and the first device. For example, the size of the identifier is larger for a shorter distance, and the size of the identifier is smaller for a longer distance.

Optionally, the display location and the size of the identifier may indicate a direction relationship between the another device and the first device.

Optionally, the identifier of the first device may be displayed in a central area of the first device distribution map.

In addition, the display locations, in the first device distribution map, of the identifiers in the first device distribution map may match the location relationship at a first angle of view. That is, the locations of the first device and the another device in the three-dimensional space at a specific angle of view may be restored in the first device distribution map. An identifier of a device has specified coordinates in the three-dimensional space, and the coordinates correspond to a physical location of the device corresponding to the identifier. That is, a relative location relationship between identifiers can reflect a relative location relationship between devices in a physical world.

Optionally, when the first device distribution map is presented in the first device, the first device distribution map is presented at a preset angle of view. For example, the identifier representing the first device (namely, the device that is being operated by the user) may be centered and displayed on the interface at an appropriate size.

In a possible implementation, the user may switch a display angle of view in the device distribution map by performing a specific operation on the interface. Specifically, an angle-of-view switching instruction may be received, and a second device distribution map is displayed, where the second device distribution map includes the identifiers corresponding to the devices, and display locations, in the second device distribution map, of the identifiers in the second device distribution map match the location relationship at a second angle of view.

The second angle of view may be an angle of view obtained by adjusting the first angle of view in a horizontal direction and/or a pitch direction, or the second angle of view may be an angle of view obtained by performing zoom-out or zoom-in on the first angle of view.

For example, the angle-of-view switching instruction may be an instruction corresponding to a swiping operation, and an angle of view in the horizontal direction is adjusted by swiping left or right, to observe an identifier of another device in the horizontal direction. An angle of view in the pitch direction is adjusted by swiping up or down, to observe another visual identifier in a vertical direction.

For example, the angle-of-view switching instruction may be an instruction corresponding to a pinching operation or a spreading operation. The angle of view may be zoomed in by pinching with two fingers, and an identifier of a device is scaled down accordingly. The angle of view may be zoomed out by spreading with two fingers, and an identifier of a terminal is scaled up accordingly. The foregoing angle-of-view switching operation may alternatively be another operation type, and is not limited to the foregoing listed part.

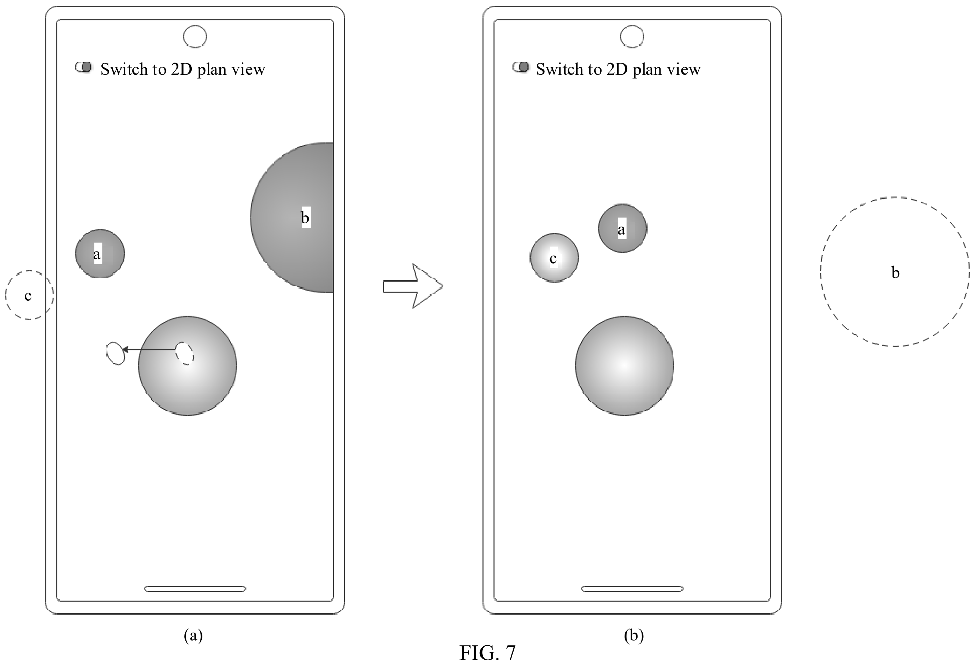

For example, FIG. 7 shows an operation of swiping left to change the angle of view in the horizontal direction. Through rotation, a sphere a representing a smart sound box is located in the center of a screen, a sphere b, on the right side, representing a television completely disappears from the screen as the angle of view changes, and a sphere c representing another device enters the screen for display. In this way, more devices in a current scenario may be viewed by adjusting the angle of view.

In a possible implementation, the location relationship may represent a relative location relationship between another device and the first device. To enable the user to know an absolute location of the another device in a space, indication information of an environment may further be displayed on a first device distribution interface, for example, may include another object (for example, some objects that are fixedly placed, for example, a table) in the environment.

In a possible implementation, the first device distribution map and the second device distribution map may be referred to as 3D spatial distribution maps. In addition to the 3D spatial distribution maps, the first device may further display a 2D planar distribution map, and the user may switch between the 2D planar distribution map and the 3D spatial distribution map based on a specific operation.

For example, a switching control is configured on a connection interface, to switch between the 2D planar distribution map and the 3D spatial distribution map on the connection interface. The 2D planar distribution map may be the same as or similar to that in the conventional technology. For example, the identifier of the first device is displayed in a central area of the 2D planar distribution map, and other devices are displayed around the currently operated device according to a specific rule.

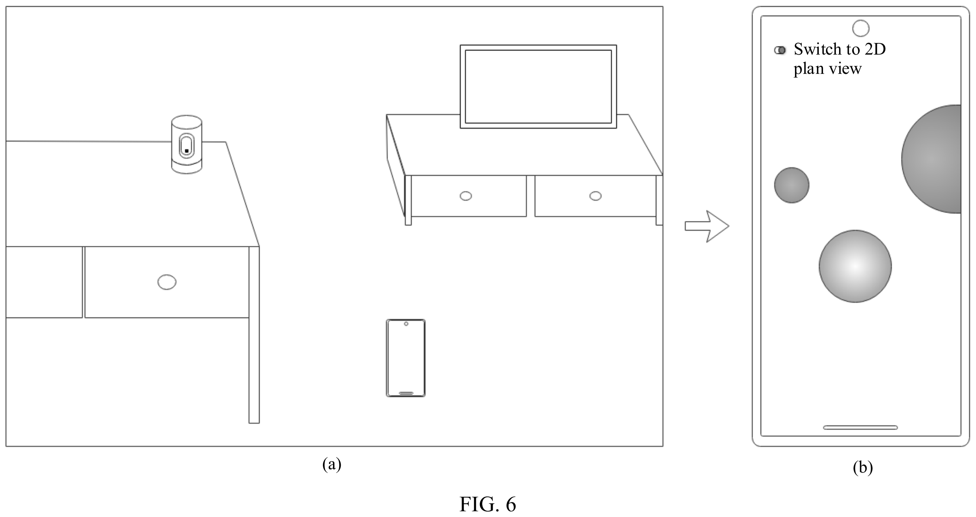

FIG. 6 shows a diagram of a 3D spatial distribution map corresponding to a physical environment. (a) in FIG. 6 is a diagram of the physical environment, and (b) in FIG. 6 is the 3D spatial distribution map. A mobile phone, a sound box, and a television communicate with each other to determine respective relative locations of a plurality of devices, so that a location distribution map may be constructed in real time, and identifiers (spheres in (a) in FIG. 6) are added to locations corresponding to the devices, so that the 3D spatial distribution map can be obtained.

When the 3D spatial distribution map is presented in the currently operated device, the 3D spatial distribution map is presented at the preset angle of view. For example, a sphere representing the first device (a device that is being operated by the user, for example, a mobile phone in (a) in FIG. 6) is centered and displayed on the screen in an appropriate size.

Optionally, identifiers corresponding to different types of devices may have different sizes (for example, spheres of different sizes), and a correspondence between a size of a sphere and a device type may be preset. For example, in (a) in FIG. 6, a radius of a sphere of the television is greater than a radius of the sphere of the mobile phone, and the radius of the sphere of the mobile phone is greater than a radius of a sphere of the smart sound box.

Optionally, a size of an identifier further changes with a change of a distance between a device and the first device, to enhance three-dimensional visual effect of a space. For example, when a distance is reduced, a size of an identifier is increased; or when the distance is increased, the size of the identifier is decreased.

In a possible implementation, devices displayed in the first device distribution map may not be all devices in an environment in which the first device is located, but some devices in the environment in which the first device is located, for example, devices (which may also be referred to as collaboration devices in this embodiment of this application) that are logged in with a same account. The first device and the collaboration device have permission to transmit data to each other.

The following describes how to identify the collaboration device from a plurality of devices.

The first device is a device that is being operated by the user, and the first device is logged in with a system-level account. Information about the account may be transmitted to a cloud via a network, or data of the collaboration device may be downloaded from the cloud, to implement cloud synchronization of account data with the collaboration device. The collaboration device is a device that is logged in with the same account as the first device. Information about the account may be transmitted to the cloud via the network, or data of a local device or another collaboration device may be downloaded from the cloud, to implement cloud synchronization of account data with the first device and the another collaboration device. Identities of the first device and the collaboration device are not unique, and may be mutually switched based on an operation of the user.

When the first device carried by the user moves in the scenario, the first device may communicate with all intelligent devices in the current scenario in a manner such as broadcast or Bluetooth communication, to obtain information about the account with which the intelligent device is currently logged in. Then, based on received feedback information, a device that is logged in with the same account as the mobile terminal is identified as the collaboration device.

Certainly, the collaboration device may be alternatively identified in another communication manner. For example, the mobile terminal obtains, from the cloud, identification information (for example, MAC addresses) of all intelligent devices that are currently logged in with the same account, and then adds representation information to a broadcast, so that only specific object (devices that are logged in with the same account) can receive the broadcast and send feedback information to the mobile terminal. Then the mobile terminal identifies the collaboration device based on the feedback information.

A communication means used to identify the collaboration device is not limited in this embodiment of this application.

It may be understood that the foregoing collaboration device may also detect the local device and another collaboration device in a similar communication manner.

It should be understood that, in addition to being used as a device displayed on the first device distribution interface, the identified collaboration device may also be used as a condition of a device with which a connection relationship is subsequently established. In other words, the device with which the first device establishes the connection relationship is selected from the collaboration devices.

502: When a location relationship with a second device in the plurality of devices meets a preset condition, establish a connection relationship with the second device, where the connection relationship is used for file transfer or used to transfer, to a connected device, media content presented by the first device for presentation.

In a possible implementation, the plurality of devices may be collaboration devices.

In a possible implementation, the first device may establish a connection relationship with a device (for example, the second device), in the plurality of devices, whose location relationship with the first device meets the preset condition.

In the conventional technology, when establishing a connection relationship between a currently used device and another device, the user needs to open a device selection interface. The interface may display another terminal in a scenario in which the terminal is located, and the user may manually select, on the interface, a terminal to which a connection needs to be established. Therefore, each time the scenario in which the terminal is located changes, the user needs to reselect, from an updated interface, a terminal to which a connection needs to be established. The operation is complex, causing poor user experience.

In this embodiment of this application, a terminal may determine, based on a location relationship between the terminal and another device in a scenario in which the terminal is located, a terminal that meets the preset condition, and automatically establish a connection relationship with the terminal that meets the preset condition, so that the user does not need to manually select a terminal each time a scenario changes. This improves user experience.

The following describes a preset condition that a relative location meets.

In this application, the relative location is used as a condition for determining whether to establish a device connection relationship. Specifically, whether the relative location meets the preset condition is used as a condition for determining whether to establish the device connection relationship. When the user wants to establish a connection between a currently used device and another device, the user usually approaches the device that the user wants to connect to. Therefore, to make a device connected to the first device meet willingness of the user, the preset condition may be set to: A relative location indicates a device, in a scenario, that the first device is approaching, or a relative location indicates a device, in a plurality of devices in a scenario, that is closest to the first device (or has a maximum approach tendency). Further, a device whose relative location meets the preset condition may be a device that the first device is approaching, or a device in the plurality of devices that is closest to the first device (or has the maximum approach tendency).

For example, an environment in which the first device is located includes a device 1, a device 2, and a device 3. In one case, the first device gradually approaches the device 1 and gradually moves away from the device 2 and the device 3, and a relative location between the first device and the device 1 may indicate that the first device and the device 1 are approaching each other. In this case, it may be considered that the device 1 is a device to which the user most likely wants to connect, because it may be determined that the relative location between the first device and the device 1 meets the preset condition.

In a possible implementation, the location relationship may include a distance, and the preset condition includes that the distance is less than a distance threshold, or the device is a device, in devices in the scenario, having a minimum distance (or a device that needs to meet both conditions of having the minimum distance and having a distance less than the distance threshold). A distance threshold may be related to a device type of a terminal. For example, a distance threshold of a smart sound box is greater than a distance threshold of a smart television.

The distance threshold may also be presented in the 3D spatial distribution map (that is, the first device distribution map and the second device distribution map that are described above). For example, distance thresholds of different devices for establishing connections may be determined based on sizes of identifiers in the 3D spatial distribution map. Different types of devices have different distance determining when establishing connections to the first device.

For example, an identifier is a sphere. Different types of devices correspond to spheres of different sizes, and a gravitational function (similar to a planetary gravitational force) may be defined for the spheres of different sizes. A longer distance indicates a smaller gravitational force. When another device enters a gravitational range of the first device, a gravitational force of a sphere of the device on the first device is calculated. When the gravitational force is greater than a preset value, it is considered that the first device may establish a connection to the device.

The distance may include at least one of a straight-line distance, a horizontal distance, or a vertical distance. A straight-line distance is a length of a connection line between geometric centers or gravity centers of two communication devices. A horizontal distance is a straight-line distance between geometric centers or gravity centers of two devices when the geometric centers or the gravity centers of the two devices are projected to a same horizontal plane. A vertical distance is a straight-line distance between geometric centers or gravity centers of two devices when the geometric centers or the gravity centers of the two devices are projected to a vertical plane.

In a possible implementation, the location relationship may include a change of the distance, and the preset condition includes that the change of the distance gradually decreases, or the device is a device, in the devices in the scenario, with a fastest distance reduction rate.

In a possible implementation, the location relationship may include a direction or a change of the direction, and that the direction or the change of the direction indicate that the device is approaching the first device, or the device is a device, in the plurality of devices in the scenario, that is closest to the first device (or has the maximum proximity tendency) may be used as the preset condition.

In a possible implementation, when the relative location between the first device and the second device in the plurality of devices in the scenario in which the first device is located meets the preset condition, the connection relationship with the second device may be established.

In addition, when the location relationship with the second device in the at least one device meets the preset condition, the second device may be used as a central device, and establishment of a connection relationship between a device, other than the second device, in the plurality of devices and the second device is triggered.

503: After the connection relationship is established, display a first identifier of the first device, a second identifier of the second device, and association information between the first identifier and the second identifier.

To enable the user to conveniently know the device that currently establishes a connection to the first device, after the connection relationship is established, the first identifier of the first device, the second identifier of the second device, and the association information between the first identifier and the second identifier may be displayed, where the association information may indicate that a connection is established between the first device and the second device.

The first identifier and the second identifier displayed in step 503 may be similar to or directly reused as the identifiers in the 3D device distribution map described above. For example, in step 503, the first identifier, the second identifier, and the association information may be displayed at display locations or on interfaces different from those in the 3D device distribution map.

In a possible implementation, the association information may include a change process of changing the first identifier and the second identifier from an unassociated state to an associated state, so that the user can intuitively learn that the connection is established between the second device and the first device and learn of timing of establishing the connection relationship. Optionally, the change process may be displayed by using a special effect of adsorption. For example, a light effect may also be displayed at an adhered portion of the identifiers.

The following describes display styles of the first identifier and the second identifier.

In a possible implementation, the first identifier of the first device and the second identifier of the second device may be displayed on an interface. A display style of the first identifier is related to a device type of the first device; or a display style of the second identifier is related to a device type of the second device.

In other words, different device types may correspond to different display styles, so that the user can conveniently know which device in the scenario is the device. Optionally, the display style may include a display size (for example, a device with a larger size may correspond to a larger identifier), a display shape (for example, may be a polygon such as a sphere or a triangle, or a more skeuomorphic shape), and a display color.

In a possible implementation, the location relationship includes a distance, where the display style of the first identifier is related to the distance; or the display style of the second identifier is related to the distance.

For example, a shorter distance indicates a larger size of the identifier, and a longer distance indicates a smaller size of the identifier.

In a possible implementation, the first identifier, the second identifier, and the associated information may be displayed through one of a status bar, a home screen wallpaper, and a floating window. The following separately describes the display manners with reference to the accompanying drawings.

### (1) Floating window:

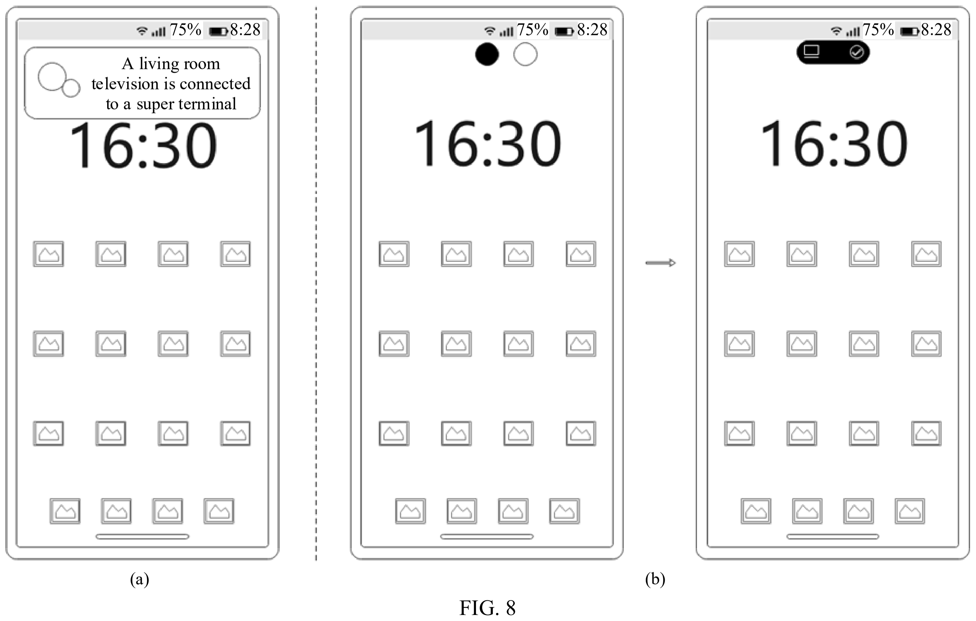

That is, a conventional prompt in a form of a bubble and a pop-up window combined with text information is used to inform the user that the connection is established between the first device and the second device. FIG. 8 shows an example of an interface with information window prompting.

(a) in FIG. 8 shows a conventional prompt through a pop-up window. A window, a card, or a bubble is popped up on an interface, and then text information is displayed in the window, the card, or the bubble, to inform the user. Alternatively, a design similar to a dynamic island in (b) in FIG. 8 may be used. A card is finally presented through an animation process, and information such as an icon and a text is used in the card to inform the user that the connection is established between the first device and the second device.

### (2) Status bar:

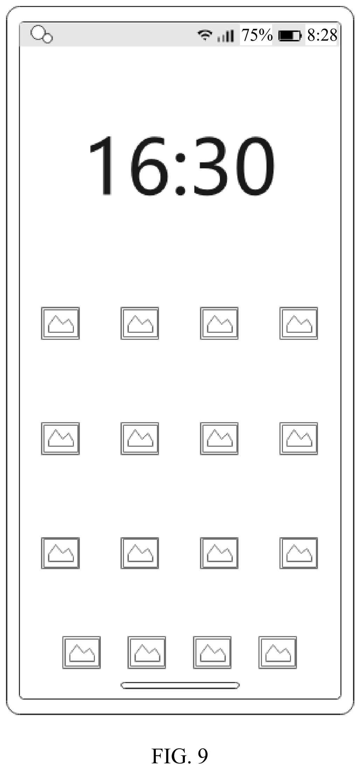

That is, an indication icon is added to a location such as a top status bar, a bottom status bar, a drop-down status bar, or a home screen, and the icon indicates that a collaborative connection is established between a current device and another device. FIG. 9 shows an example of adding the indication icon to the top status bar.

### (3) Change of a home screen wallpaper:

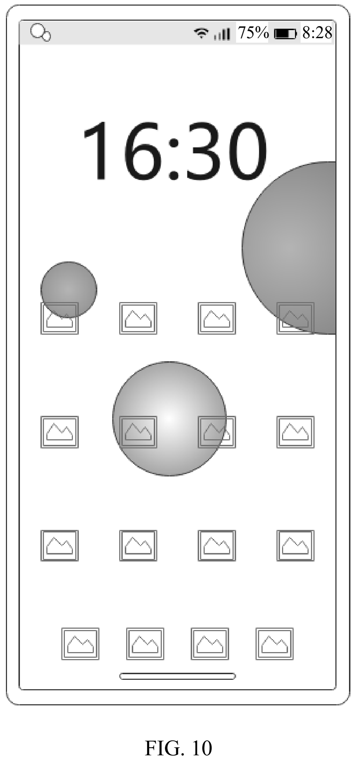

That is, a change of a wallpaper is used to inform that a connection is established between two devices. Optionally, the 2D planar distribution map or the 3D spatial distribution map described above may be directly used as a home screen wallpaper, that is, the 2D planar distribution map or the 3D spatial distribution map (for example, the first device distribution map or the second device distribution map described in the foregoing embodiment) on the connection interface may be set as the home screen wallpaper in a connection establishment process or after a collaborative connection is established. FIG. 10 is a diagram of an interface in which the 3D spatial distribution map is set as the home screen wallpaper.

When the spatial distribution map is set as the wallpaper, because the wallpaper and the spatial distribution map are a same animation model, interface graphics seen by the user before and after the operation are not changed. The user is informed by using the change of the wallpaper. This can have a notification function and can reduce a sense of intention of a conventional notification manner such as an information window, and this notification manner is natural.

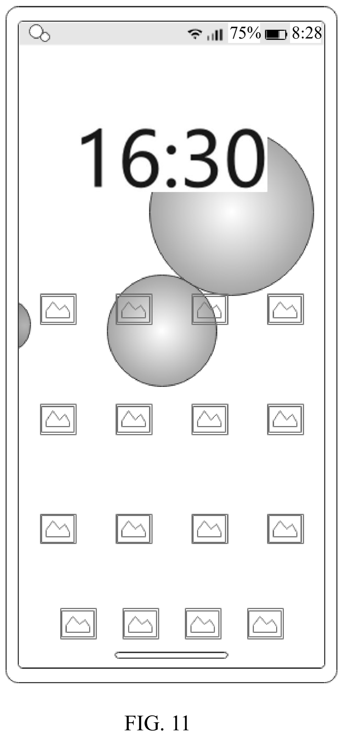

For example, FIG. 10 is a diagram of an effect of setting the 3D spatial distribution map as the wallpaper. In FIG. 10, a collaborative connection is not established between two devices. When a connection is established between two devices, two spheres approach each other and are adhered together after collision, that is, this indicates that the connection is established between the two devices. FIG. 11 shows a home screen wallpaper obtained after a collaborative connection is established. In FIG. 11, after the connection is established, the two spheres are adhered to each other. This indicates that the collaborative connection is established between the two devices, and a multi-device collaboration capability such as data transfer and file transfer may be implemented between the two devices. The 2D or 3D device distribution map can completely present a process of establishing the connection between the two devices. Therefore, when the device distribution map is set as the wallpaper, the user may intuitively "see", from the wallpaper, the process of establishing the collaborative connection between the two devices.

To identify the establishment relationship of the collaborative connection, a corresponding light effect may be displayed at an intersection point of the spheres, for example, a light emitting effect is displayed at the intersection point of the two spheres.

Optionally, after the connection is established, because such adhesion needs to be maintained, coordinates of a device (especially a mobile terminal) in the physical world are no longer in a one-to-one correspondence with a location corresponding to the device in the three-dimensional space. The one-to-one correspondence may be restored after the connection is disconnected.

Optionally, the home screen wallpaper including the first identifier, the second identifier, and the associated information may be displayed for a preset time, for example, only 10 seconds, to implement a notification function. For another example, the home screen wallpaper is displayed until the user performs an operation on an identifier on the home screen or disconnects the connection, and then display of an original wallpaper is restored.

As described in the foregoing embodiment, the second device may be used as the central device, and establishment of the connection relationship between a device, other than the second device, in the plurality of devices and the second device is triggered. In this case, in addition to the association relationship between the identifiers of the first device and the second device, an identifier corresponding to another device in the scenario and an association relationship between the another device and the second device may be further displayed. For example, identifiers of remaining devices may be adsorbed to the identifier of the second device.

After the connection relationship between the first device and the second device is established, data transmission, data transfer, and the like between the first device and the second device may be implemented. The following describes a specific illustration of a data transfer process.

In a possible implementation, the first device may receive a first operation of the user and switch a currently displayed application interface to a connection interface. The connection interface may be an interface corresponding to the home screen wallpaper described above. As described above, the first identifier of the first device, the second identifier of the second device, and the association information between the first identifier and the second identifier may be displayed through the home screen wallpaper. For example, the first operation may be: after the opened application interface is displayed in full screen, performing a gesture of swiping up from the bottom. When the operation is performed, an operating system displays the connection interface in response to the operation.

In a possible implementation, after the first operation is received, in addition to switching the currently displayed application interface to the connection interface, a card corresponding to the application interface may be further displayed on the connection interface in a floating manner. For example, the application interface may be gradually scaled down in a process of performing the first operation, and finally, the application interface is scaled down into a window card and is suspended at the first identifier corresponding to the first device.

In a possible implementation, a second operation may be received, where the second operation indicates to move the card to the second identifier; and media content presented on the application interface is transferred to the second device for presentation. The first operation may be a drag operation on a card. In this embodiment of this application, the card may be dragged to move between different identifiers, to implement application data transfer. For a specific execution process of data transfer, refer to existing data transfer between a plurality of devices, and details are not described herein again.

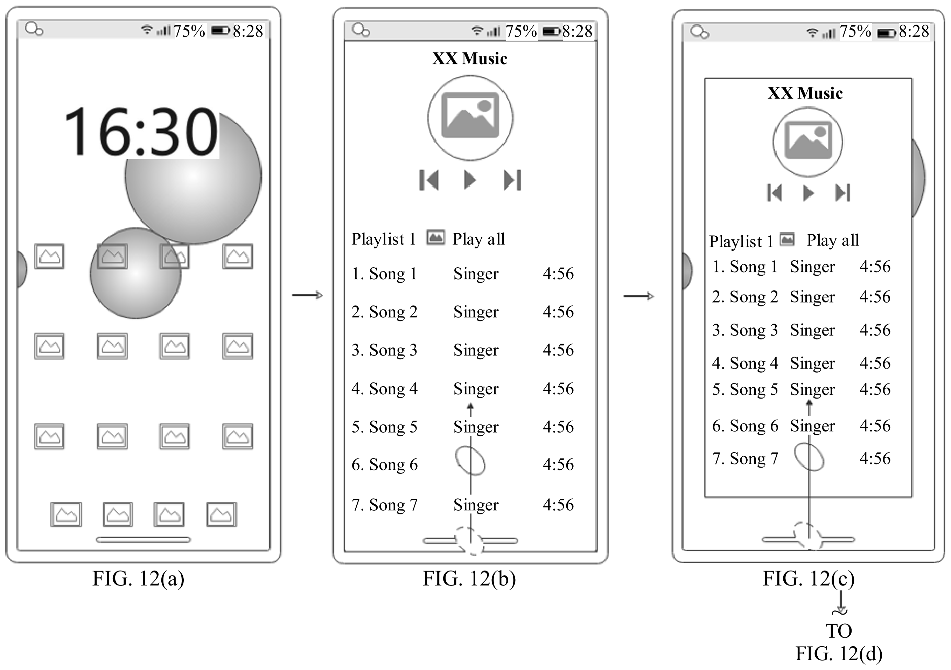

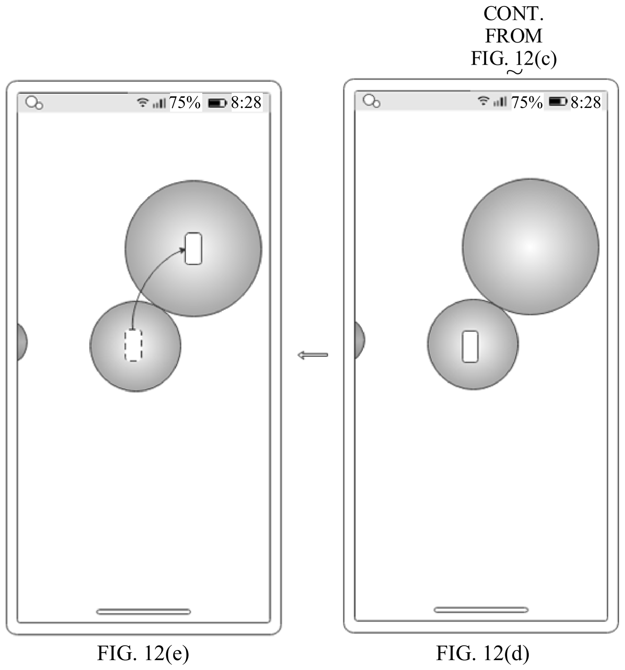

For example, FIG. 12(a) to FIG. 12(e) shows a complete interface change during data transfer. In FIG. 12(a), a collaborative connection is established between a mobile phone and another device (for example, a living room television), and spheres representing the two devices are attracted and adhered to each other. This may be directly observed through a wallpaper. When it is expected to transfer music on the mobile phone to the living room television, a music interface (as shown in FIG. 12(b)) is first displayed, and then a gesture of swiping up from the bottom is performed. As the gesture of swiping up from the bottom is performed, a music application window gradually scaled down, and a part of the wallpaper may be observed (as shown in FIG. 12(c)). When swiping up to a predetermined location/area (for example, the middle of the screen), the window is scaled down to a form of a window card (FIG. 12(d)). The window card is dragged to move between different spheres, and the card is released in the sphere corresponding to the living room television, that is, transfer of music data is triggered (as shown in FIG. 12(e)), and the music data that is being played is transmitted to the living room television through a data channel.

In this manner of displaying the connection interface, when the 3D spatial distribution map is set as the wallpaper, because the wallpaper and the 3D spatial distribution map on the connection interface are the same animation model, the interface graphics seen by the user before and after the preset operation is performed are not changed, so that as perceived by the user, instead of jumping to another interface to perform data transfer, data transfer is directly performed on the home screen. This makes the entire data transfer process smoother and more natural and improves subjective perception experience of the user.

An embodiment of this application provides a device connection method. The method includes: obtaining the location relationship between the first device and each of the plurality of devices in the scenario in which the first device is located; when the location relationship with the second device in the plurality of devices meets the preset condition, establishing the connection relationship with the second device, where the connection relationship is used for file transfer or used to transfer, to a connected device, media content presented by the first device for presentation; and after the connection relationship is established, displaying the first identifier of the first device, the second identifier of the second device, and the association information between the first identifier and the second identifier. In the foregoing manner, a terminal may determine, based on a location relationship between the terminal and another device in a scenario in which the terminal is located, a terminal that meets a preset condition, and automatically establish a connection relationship with the terminal that meets the preset condition, so that a user does not need to manually select a terminal each time a scenario changes, and the user does not need to determine a specific device that needs to be connected; and provided that the user approaches a device that needs to be connected in the physical world, a connection to the device can be automatically established. This improves user experience.

In addition, when the user switches from one scenario to another close scenario, the terminal device may disconnect a connection to a device in the original scenario, and automatically establish a connection to a terminal, in the new scenario, that meets a condition.

For example, for two scenarios: a living room and a study, the terminal device is in the living room initially, and after the user carries the terminal device into the study, the terminal device disconnects a connection to a device in the living room and is automatically connected to a device (a device that meets the preset condition) in a space range of the study.

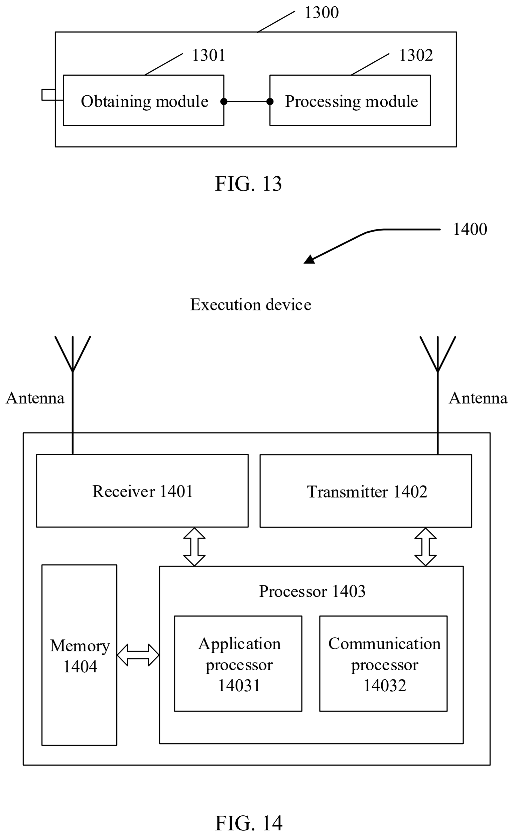

FIG. 13 is a diagram of a device connection apparatus according to an embodiment of this application. The apparatus 1300 includes the following modules.

An obtaining module 1301 is configured to obtain a location relationship between a first device and each of a plurality of devices in a scenario in which the first device is located.

For specific descriptions of the obtaining module 1301, refer to the descriptions of step 501 in the foregoing embodiment. Details are not described herein again.

A processing module 1302 is configured to: when a location relationship with a second device in the plurality of devices meets a preset condition, establish a connection relationship with the second device, where the connection relationship is used for file transfer or used to transfer, to a connected device, media content presented by the first device for presentation; and
after the connection relationship is established, display a first identifier of the first device, a second identifier of the second device, and association information between the first identifier and the second identifier.

For specific descriptions of the processing module 1302, refer to the descriptions of steps 502 and 503 in the foregoing embodiment. Details are not described herein again.

In a possible implementation, the first identifier, the second identifier, and the associated information are displayed through one of a status bar, a home screen wallpaper, and a floating window.

In a possible implementation, the association information includes a change process of changing the first identifier and the second identifier from an unassociated state to an associated state.

In a possible implementation, the change process is displayed by using a special effect of adsorption.

In a possible implementation,
a display style of the first identifier is related to a device type of the first device; or
a display style of the second identifier is related to a device type of the second device; or
the location relationship includes a distance, and a display style of the first identifier is related to the distance; or
a display style of the second identifier is related to a distance, where
the display style includes at least one of a display size, a display shape, and a display color.

In a possible implementation, the location relationship includes at least one of a distance, a change of a distance, a relative direction, and a change of a relative direction.

In a possible implementation, the location relationship includes a distance, the preset condition includes that the distance is less than a distance threshold, and at least two different types of devices correspond to different distance thresholds.

In a possible implementation, the location relationship is a location relationship in a three-dimensional space, and the processing module 1302 is further configured to:
display a first device distribution map based on the location relationship, where the first device distribution map includes identifiers corresponding to the devices, and display locations, in the first device distribution map, of the identifiers in the first device distribution map match the location relationship at a first angle of view; and
receive an angle-of-view switching instruction, and display a second device distribution map, where the second device distribution map includes the identifiers corresponding to the devices, and display locations, in the second device distribution map, of the identifiers in the second device distribution map match the location relationship at a second angle of view.

In a possible implementation, the processing module 1302 is further configured to:
when the location relationship with the second device in the at least one device meets the preset condition, trigger establishment of a connection relationship between a device, other than the second device, in the plurality of devices and the second device.

In a possible implementation, the processing module 1302 is specifically configured to:
receive a first operation, switch a currently displayed application interface to a connection interface, and display, on the connection interface, the first identifier of the first device, the second identifier of the second device, and the association information between the first identifier and the second identifier.

The processing module 1302 is further configured to: display, on the connection interface in a floating manner, a card corresponding to the application interface;
receive a second operation, where the second operation indicates to move the card to the second identifier; and
transfer, to the second device for presentation, media content presented on the application interface.

The following describes an execution device provided in an embodiment of this application. FIG. 14 is a diagram of a structure of an execution device according to an embodiment of this application. The execution device 1400 may be specifically represented as a mobile phone, a tablet, a notebook computer, a smart wearable device, or the like. This is not limited herein. Specifically, the execution device 1400 includes a receiver 1401, a transmitter 1402, a processor 1403, and a memory 1404 (there may be one or more processors 1403 in the execution device 1400, and one processor is used as an example in FIG. 14). The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data to the processor 1403. A part of the memory 1404 may further include a non-volatile random access memory (non-volatile random access memory, NVRAM). The memory 1404 stores a processor and operation instructions, an executable module or a data structure, a subset thereof, or an expanded set thereof. The operation instructions may include various operation instructions for implementing various operations.

The processor 1403 controls an operation of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1403 or may be implemented by the processor 1403. The processor 1403 may be an integrated circuit chip and has a signal processing capability. In an implementation process, steps in the foregoing method may be implemented by using a hardware integrated logic circuit in the processor 1403, or by using instructions in a form of software. The processor 1403 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the method, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing method in combination with hardware of the processor 1403.

The receiver 1401 may be configured to: receive input digital or character information, and generate a signal input related to a related setting and function control of the execution device. The transmitter 1402 may be configured to the output digit or character information. The transmitter 1402 may be further configured to send instructions to a disk group, to modify data in the disk group.

In this embodiment of this application, in one case, the processor 1403 is configured to perform the steps of the device connection method in the embodiment corresponding to FIG. 5.

An embodiment of this application further provides a computer program product including computer-readable instructions. When the computer program product is run on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program is run on a computer, the computer is enabled to perform steps performed by the foregoing execution device, or the computer is enabled to perform steps performed by the foregoing training device.

In addition, it should be noted that the described apparatus embodiment is merely an example. Units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiment provided in this application, connection relationships between modules indicate that the modules have communication connections with each other, and may be specifically implemented as one or more communication buses or signal cables.

Based on the descriptions of the foregoing implementations, a person skilled in the art may clearly understand that this application may be implemented by software in addition to necessary universal hardware, or certainly by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A device connection method, applied to a first device, wherein the method comprises:
obtaining a location relationship between the first device and each of a plurality of devices in a scenario in which the first device is located;
when a location relationship with a second device in the plurality of devices meets a preset condition, establishing a connection relationship with the second device, wherein the connection relationship is used for file transfer or used to transfer, to a connected device, media content presented by the first device for presentation; and
after the connection relationship is established, displaying a first identifier of the first device, a second identifier of the second device, and association information between the first identifier and the second identifier.

2. The method according to claim 1, wherein the first identifier, the second identifier, and the association information are displayed through one of a status bar, a home screen wallpaper, and a floating window.

3. The method according to claim 1 or 2, wherein the association information comprises a change process of changing the first identifier and the second identifier from an unassociated state to an associated state.

4. The method according to claim 3, wherein the change process is displayed by using a special effect of adsorption.

5. The method according to any one of claims 1 to 4, wherein
a display style of the first identifier is related to a device type of the first device; or
a display style of the second identifier is related to a device type of the second device; or
the location relationship comprises a distance, and a display style of the first identifier is related to the distance; or
a display style of the second identifier is related to the distance, wherein
the display style comprises at least one of a display size, a display shape, and a display color.

6. The method according to any one of claims 1 to 5, wherein the location relationship comprises at least one of a distance, a change of a distance, a relative direction, and a change of a relative direction.

7. The method according to any one of claims 1 to 6, wherein the location relationship comprises a distance, the preset condition comprises that the distance is less than a distance threshold, and at least two different types of devices correspond to different distance thresholds.

8. The method according to any one of claims 1 to 7, wherein the location relationship is a location relationship in a three-dimensional space, and the method further comprises:
displaying a first device distribution map based on the location relationship, wherein the first device distribution map comprises identifiers corresponding to the devices, and display locations, in the first device distribution map, of the identifiers in the first device distribution map match the location relationship at a first angle of view; and
receiving an angle-of-view switching instruction, and displaying a second device distribution map, wherein the second device distribution map comprises the identifiers corresponding to the devices, and display locations, in the second device distribution map, of the identifiers in the second device distribution map match the location relationship at a second angle of view.

9. The method according to any one of claims 1 to 8, wherein the method further comprises:
when the location relationship with the second device in the at least one device meets the preset condition, triggering establishment of a connection relationship between a device, other than the second device, in the plurality of devices and the second device.

10. The method according to any one of claims 1 to 9, wherein displaying the first identifier of the first device, the second identifier of the second device, and the association information between the first identifier and the second identifier comprises:
receiving a first operation, switching a currently displayed application interface to a connection interface, and displaying, on the connection interface, the first identifier of the first device, the second identifier of the second device, and the association information between the first identifier and the second identifier; and
the method further comprises:
displaying, on the connection interface in a floating manner, a card corresponding to the application interface;
receiving a second operation, wherein the second operation indicates to move the card to the second identifier; and
transferring, to the second device for presentation, media content presented on the application interface.

11. A device connection apparatus, used in a first device, wherein the apparatus comprises:
an obtaining module, configured to obtain a location relationship between the first device and each of a plurality of devices in a scenario in which the first device is located; and
a processing module, configured to: when a location relationship with a second device in the plurality of devices meets a preset condition, establish a connection relationship with the second device, wherein the connection relationship is used for file transfer or used to transfer, to a connected device, media content presented by the first device for presentation; and
after the connection relationship is established, display a first identifier of the first device, a second identifier of the second device, and association information between the first identifier and the second identifier.

12. The apparatus according to claim 11, wherein the first identifier, the second identifier, and the association information are displayed through one of a status bar, a home screen wallpaper, and a floating window.

13. The apparatus according to claim 11 or 12, wherein the association information comprises a change process of changing the first identifier and the second identifier from an unassociated state to an associated state.

14. The apparatus according to claim 13, wherein the change process is displayed by using a special effect of adsorption.

15. The apparatus according to any one of claims 11 to 14, wherein
a display style of the first identifier is related to a device type of the first device; or
a display style of the second identifier is related to a device type of the second device; or
the location relationship comprises a distance, and a display style of the first identifier is related to the distance; or
a display style of the second identifier is related to the distance, wherein
the display style comprises at least one of a display size, a display shape, and a display color.

16. The apparatus according to any one of claims 11 to 15, wherein the location relationship comprises at least one of a distance, a change of a distance, a relative direction, and a change of a relative direction.

17. The apparatus according to any one of claims 11 to 16, wherein the location relationship comprises a distance, the preset condition comprises that the distance is less than a distance threshold, and at least two different types of devices correspond to different distance thresholds.

18. The apparatus according to any one of claims 11 to 17, wherein the location relationship is a location relationship in a three-dimensional space, and the processing module is further configured to:
display a first device distribution map based on the location relationship, wherein the first device distribution map comprises identifiers corresponding to the devices, and display locations, in the first device distribution map, of the identifiers in the first device distribution map match the location relationship at a first angle of view; and
receive an angle-of-view switching instruction, and display a second device distribution map, wherein the second device distribution map comprises the identifiers corresponding to the devices, and display locations, in the second device distribution map, of the identifiers in the second device distribution map match the location relationship at a second angle of view.

19. The apparatus according to any one of claims 11 to 18, wherein the processing module is further configured to:
when the location relationship with the second device in the at least one device meets the preset condition, trigger establishment of a connection relationship between a device, other than the second device, in the plurality of devices and the second device.

20. The apparatus according to any one of claims 11 to 19, wherein the processing module is specifically configured to:
receive a first operation, switch a currently displayed application interface to a connection interface, and display, on the connection interface, the first identifier of the first device, the second identifier of the second device, and the association information between the first identifier and the second identifier; and
the processing module is further configured to: display, on the connection interface in a floating manner, a card corresponding to the application interface;
receive a second operation, wherein the second operation indicates to move the card to the second identifier; and
transfer, to the second device for presentation, media content presented on the application interface.

21. A device connection apparatus, wherein the apparatus comprises a memory and a processor, the memory stores code, and the processor is configured to obtain the code and perform the method according to any one of claims 1 to 10.

22. A computer-readable storage medium, comprising computer-readable instructions, wherein when the computer-readable instructions are run on a computer device, the computer device is enabled to perform the method according to any one of claims 1 to 10.

23. A computer program product, comprising computer-readable instructions, wherein when the computer-readable instructions are run on a computer device, the computer device is enabled to perform the method according to any one of claims 1 to 10.
